# EUROPEAN PATENT APPLICATION

(11) **EP 1 418 550 A2**
(43) Date of publication of application: **12.05.2004**
(21) Application number: 03025471.8
(22) Date of filing: 06.11.2003
(51) Int. Cl.: G07F 7/10, G06K 19/073, G06K 19/10

(54) **Card equipped with password input keys**

(30) Priority: 08.11.2002 KR 2002069130
(71) Applicant: Park, Jung Woong, Seocho-Gu, Seoul (KR)
(72) Inventor: Park, Jung Woong, Seocho-Gu, Seoul (KR)
(74) Representative: Kirschner, Klaus Dieter, Dipl.-Phys.

(57) **Abstract**

Disclosed herein is a card equipped with password input keys and the activating method thereof which is applied to magnetic card, IC card e.g. credit card, cash card and so on or hybrid card which is combined the said cards together. A part or whole of magnetic film is printed demagnetized and the card is activated by supplying magnetic force from installed permanent magnetic body to the said magnetic film when inputting a correct password through password input keys placed on the side of a lower edge of the card. The card equipped with password input keys, may also comprise a controller which activates the card when a correct password is input from the said password input keys.

## Description

The present invention relates to a card equipped with input keys to enter and change individualized security codes and a method of activating thereof.

In general, methods or devices to add security to credit or cash cards which need various security measures, require signatures on the cards or attach a picture ID on the cards. Signatures on the cards, however, cannot prevent unauthorized use of the cards when the unauthorized users forge the signatures at the back side of the card when the cards are stolen or lost, because vendors accept the cards without check the signatures closely in many cases. Picture ID's on the cards have the same problem: accepting vendors are not careful all the time to check the face with the picture and also pictures can be replaced when the cards are lost or stolen. Therefore, picture ID's cannot prevent unauthorized use of stolen or lost cards.

In order to solve the above problems of the conventional methods of card security, a device and a method are known using pressing buttons on the surface of the cards to input password. The known device and method are disclosed in Korean Patent No. 2002- 45187.

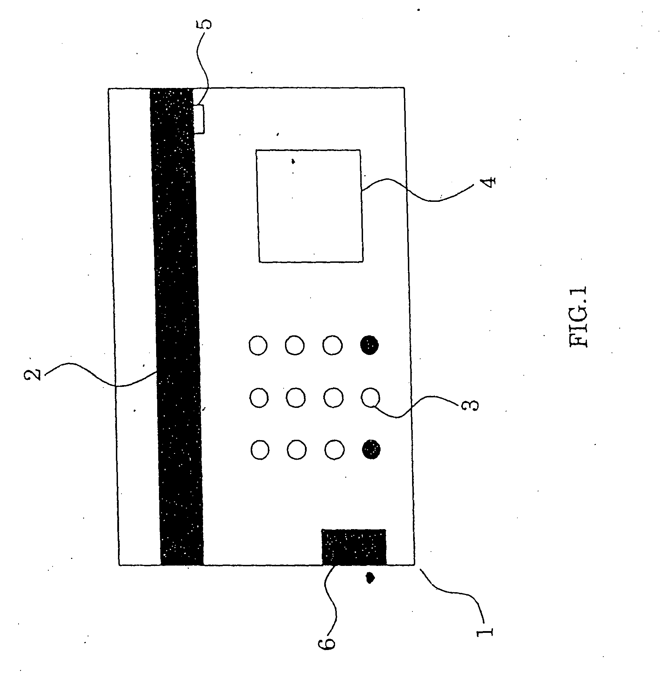

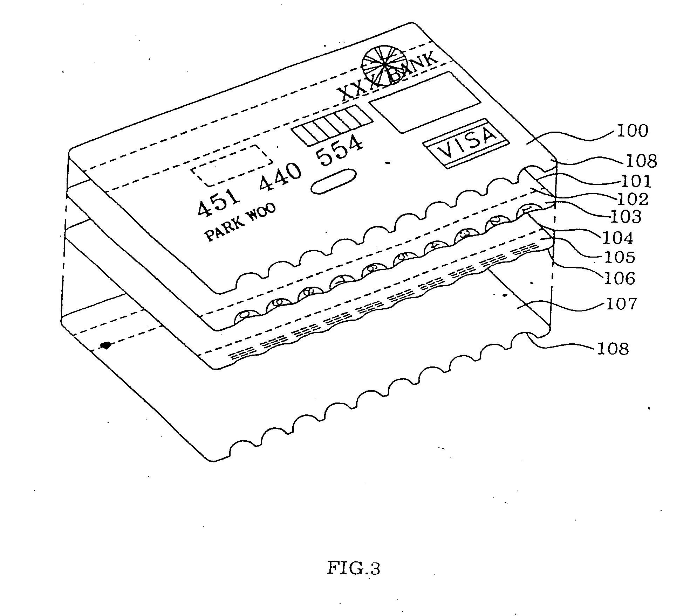

A card 1 of the state of the art is shown in Figure 1 wherein the card which has magnetic film 2 at the back side in which film card information is encoded or imprinted. The card comprises a button section 3 which decides, by pressing action, whether to print information on the magnetic film 2 on the surface of the said card 1 or not. An information control section 4 controls the status of output of information printed on the magnetic film 2 on the surface of the said card 1 by pressing action. A mode setting section 5 enables output of information printed on the said magnetic film 2 as well as conducting lock/unlock functions of the information control section 4. A connection section 6 at a side edge of the card 1 provides electric supply to the information section 4.

However, the card equipped with the device and method has the problem of being susceptible to damages to connecting switches and erratic operations because the button section 3 which has about ten buttons on the surface, is continuously put under pressure on both sides when the card is stored in the bill folders or in the pockets whereby the buttons themselves are continually pressed. Also the card is liable to damages by repeated use and erratic operation because the button section 3 was pressed when the card was inserted to card readers or ATM machines. In addition, it was impossible to place the button section 3 of ten buttons on the size-limited surface of the typical credit or cash cards. Even if the button section 3 can be placed on the card surface, the size of each button is too small to allow accurate input.

Under security scheme of the known card, a card subscriber suffers from the inconvenience of remembering double passwords which control the information output of magnetic film 2 all the time, one is the password of the card to be printed on the magnetic film 2 and another is the password of an established combination on the button section 3.

Furthermore, with respect to the card 1 using the conventional technology, there is a description in the Korean Patent No. 2002-45187 that the mode setting section 5 will enable information output from the magnetic film 2 by way of setting lock/unlock functions, but the Korean Patent No. 2002-45187 fails to disclose how and with what technological means of locking/unlocking it is achieved that the information already printed on the magnetic film 2 can be read or can not to be read. That is a problem in the technological implementation of the said device and method.
Accordingly, the present invention has been made keeping in mind the above problems occurring in the prior art, and it is an object of the present invention to activate and read the card which is equipped with password input keys when a correct password is input and prevent unauthorized use of stolen or lost card. Also the present invention will prevent the use of copied or forged cards.

To achieve the above object, a card equipped with password input keys comprises the features of claim 1. Advantageous embodiments of the invention are characterized in the subclaims.

According to a preferred embodiment of the invention the password input keys comprise number boards on a lateral side of the card which boards are configured to be being elastically pushed; and wherein switches are provided in the number boards connecting input signals of the number boards to said controller when the number boards are pushed against the elastic force of the said number boards.

The above and other objects, features and other advantages of the present invention will be more clearly understood from the following detailed description taken in conjunction with the accompanying drawings, in which:
Figure 1 illustrates the plan view of the exiting related art for the card security system.
Figure 2 illustrate a perspective view of the card equipped with input keys.
Figure 3 illustrates a perspective view of separate layers of the card.
Figure 4a illustrates a perspective view of the method of inputting password using a finger tip.
Figure 4b illustrates a perspective view of the method of inputting password using a pencil tip.
Figure 5 illustrates a plan view of the circuitry block inside the card.
Figure 6a illustrates a perspective view of the card equipped with password input keys with solar power source.
Figure 6b illustrates a plan view of the components of the card equipped with the password input keys

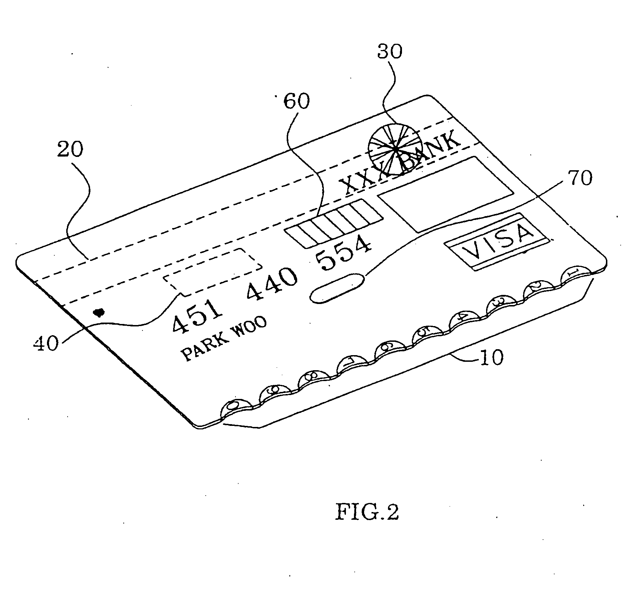

Figure 2 is a perspective view of the card equipped with password input keys. Figure 2 is an example of the present invention applied to a hybrid card combining a magnetic card with an IC card.

The card in accordance with an example of the present invention includes password input keys 10 to input a password to activate or deactivate the card which keys are formed on a side or side edge of the card. On a magnetic film 20 a part or all of data pattern is imprinted by demagnetizing it. A control section 30 or IC chip controls the magnetic force supplied to magnetic film 20 in accordance with the password number input and the thin film type permanent magnetic body 40.

Furthermore, the front side of the card according to an example of present invention may include additionally a power supply section 60 which is made of a photovoltaic solar film to supply electric power to drive component circuits inside the card. The photovoltaic solar film 60 of thin film type may be activated by light of illumination or artificial light, e.g. by an electric lamp, and by visible light available to use in normal operating environment and operates thereon. In case the control section 30 is an IC chip, power may be supplied by a coil downloading system installed in IC chip.

As shown in Figure 2, the card equipped with password input keys has a display window 70 that displays all set or "OK" to use the card for fixed period of time, e.g. 30 minutes or 60 minutes after inputting correct password by password input key 10. under the control of the control section 30, and that displays "ERROR" when a wrong password is input.

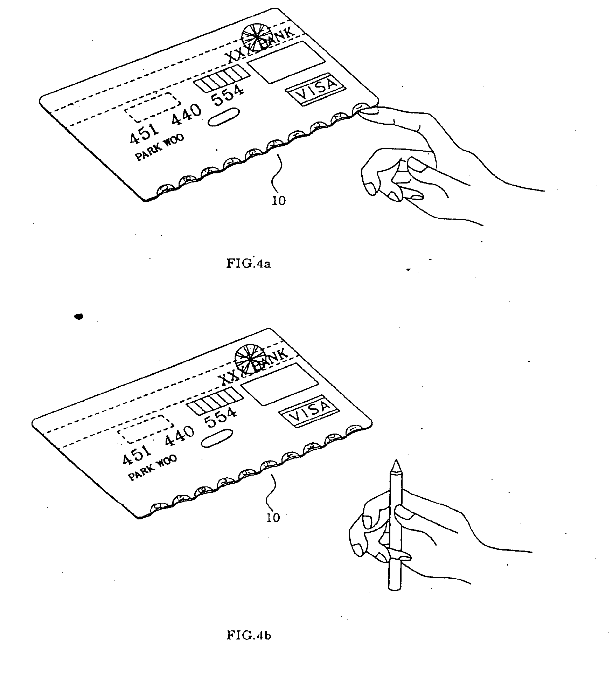

Figure 3 is a exploded perspective view of the card equipped with password input keys in Figure 2. The card equipped with password input keys is formed out of a plurality of plastic material layers 100, 101, 104 and 107. The layers 100 and 107 from the front and the back side of the card respectively and are out of the same plastic material as a normal card. The layers 101 and 104 where the first plastic material layer 101 is neighboring the second plastic material layer 104, are inserted in between the layers 100 and 107 and have elastic rubber portions 103, 105 at their lower side edges.

The first plastic material layer 101 comprises in part a layer 102 of plastic material and the lower edge of one side of the first plastic material layer 101 it is made of a silicon or synthetic rubber portion 103. Numbers to input the password are arranged on the upper side of the rubber portion 103 and are formed in fixed intervals. Moreover, the second plastic material layer 104 also comprises in part a layer of plastic material and lower edge of one side is made of a silicon or synthetic rubber portion 105. Switch circuits 106 are inserted to the medial side of the rubber portion 105 and are configured to be connected when the array of numbers placed on the first plastic layer is pressed.

As shown in Figure 2, the structure of the switch circuits 106 is arranged to connect only when the pressure is applied to the side of the card, and the switch circuits 106 are not affected by pressure applied from the front or back sides 100, 107 of the card.

The lower part of one side or the portion 103 of the first plastic material layer 101 where the row of numbers are placed for the password input and the lower part of the portion 105 of the second plastic layer 104 where the switch connectors 106 are inserted, have dents so that passwords are easily input by using the fingertip or writing implements to apply pressure on the password input keys when the card equipped with the application of the present invention as shown in Figure 4a or 4b. The lower edges of the front and back sides of the card have a plurality of semicircular guides 108 so that a user can be guided to the right position to input the password correctly and accidental pressing of the input keys can be prevented.

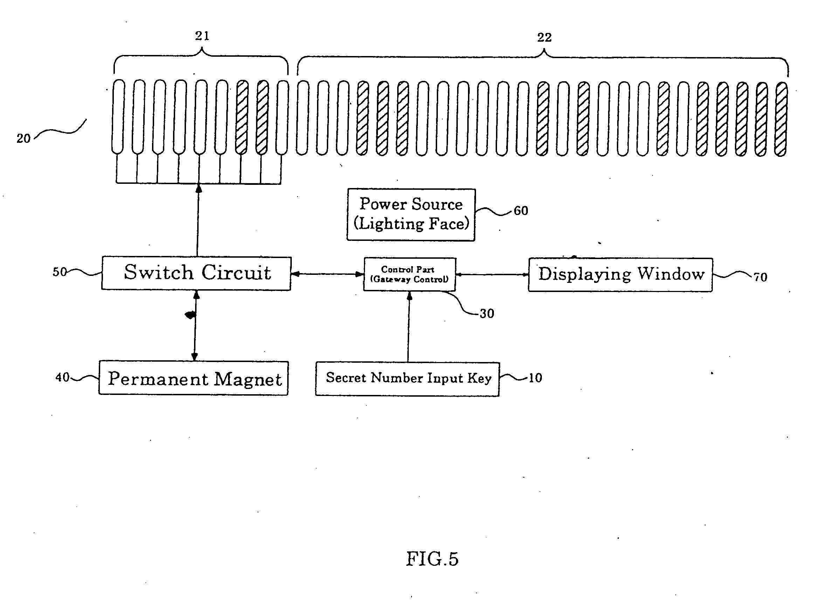

Figure 5 is a plan view of block diagram of the circuitry inside the card equipped with password input keys in accordance with an embodiment of present invention.

The inside circuitry of the card equipped with password input keys in accordance with the embodiment of Figure 5 of the present invention, comprises the password input keys 10 to input the password to activate or deactivate the card placed at the lower edge of one side, the magnetic film 20 printed on the card with data signal patterns of which a part or whole is demagnetized, the control section or IC chip 30 to control the supply of magnetic force to the said magnetic film 20, a thin-film type permanent magnetic body 40 to supply magnetic force to the said magnetic film 20, and a switch circuitry section 50 to supply magnetic force to the magnetic film 20 according to the control of the said control section 30.

The power supply section 60 consisting of a thin-film photovoltaic solar film, can be included to supply electric power necessary for the operation of each component circuitry of the card. In case the control section is an IC chip, the power can be supplied by a coil downloading system installed in IC chip.

Using the installed control program, the control section 30 checks the password input by pressing on the password input keys, with the password stored in the program (not shown in the figure). If the two numbers match, the magnetic force of permanent magnetic body 40 is supplied to magnetic film 20 through the switch circuitry 50 and the magnetic force is supplied to the whole binary data signal pattern 21 plus 22 or to part 21 of a binary data signal pattern in the magnetic film 20 which is/are demagnetized to activate the card such that it can be read by general card reader and automatic teller machine.

If the two numbers do not match, the control section 30 outputs a control signal to switch circuitry 50 so that the magnetic force supplied to the whole 20 or part 21 of the magnetic film is blocked or that it interlocks with power supply section made of photovoltaic solar film to block the power supply for the circuitry, so that the card is deactivated and can not be read by a card reader and an automatic teller machine.

As shown in Fig. 5, when a secret number from the secret number input key 10 is input to the controller 30, the controller 30 switches the switch circuit 50 on. Then, the permanent body 40 applies magnetic force to the demagnetized part 21 through the switch circuit 50. The security code of the magnetic film 20 may consist, for example, of more than sixteen magnetic bars of a bar code. The secret number may consist, for example, of four to eight numbers. So, in this specific embodiment, the security code cannot be directly compared with the secret number. Finally, when the secret number in the controller is equal to the secret number being input from the secret number input key, the controller controls the supply of magnetic force from the permanent body to the demagnetized part of the secret code in the magnetic film.

The control section 30 may include a relay timer (not shown in the figure) to block the magnetic force supplied from the permanent magnetic body 40 and the switch circuitry section 50 to magnetic film 20 after a fixed time, e.g. 30 minutes or 60 minutes, has elapsed after the use of the card by inputting the correct password through the password input keys 10.

As shown in Figure 2, the card in accordance with an example of the present invention has a display window 70 that displays "OK" to use the card for a fixed period of time, e.g. 30 minutes or 60 minutes, after inputting the correct password by the password input key 10 by using relay timer of the control section 30 and display "ERROR" when a wrong password is input.

The control section 30 of the card in accordance with an example of the present invention may include the function to ensure the accuracy of the first password input by requiring a user to input the four-digit password three times repeatedly before the password is established.

The control section 30 of the card equipped with password input keys in accordance with the present invention may include a simple card operating system COS program. When a correct card user uses the card for the first time by entering the secret number, the COS program enables transmission of the password at the same time with the approval request from the card reader and automatic registration of the secret number at the card approval system. Accordingly, when the card is stolen, lost, copied, or forged and an unauthorized user tries to use the card without inputting the password, the card will be deactivated by the wrong password and the transaction will not be approved. Furthermore, the card company or the security company will be alerted so that unauthorized use of stolen, lost, forged or copied card will be prevented.

As stated above, the method to activate the card equipped with password input keys in accordance with the present invention is as follows : for a magnetic card or a hybrid card with magnetic strip 20 and ICs where one part 21 of the data signal pattern in the magnetic film is imprinted by demagnetization, and the other part 22 of the data signal pattern is imprinted by magnetization or the complete data signal pattern in the said magnetic film 20 is imprinted by demagnetization, if the correct password is input through password input key 10, magnetic force is supplied to a part or all of the data signal pattern in the magnetic film 20 so that the card is activated to be read.

The magnetic film 20 in the magnetic card is designed for magnetic head of a card reader and ATM to sense by recording magnetized material like oxidized iron and combining data signal binary: 0,1 such as card information, card user identity information etc. on magnetic record strip in the form of barcode. The present invention envisions that the whole 20 or part 21 of data signal pattern is printed demagnetized when the card is issued and recorded and the magnetic force of thin film typed permanent magnetic body 40 is supplied through switch circuitry 50 and data signal pattern of the said magnetic film is magnetized and is read when user inputs correct password.

The method to activate the card equipped with password input keys in accordance with the present invention is as follows : for a magnetic card or a hybrid card combined with the said magnetic card with IC card, the whole 20 or part 21 of data signal pattern is printed magnetized very weakly not to be sensed by card reader or ATM and the said card is activated by supplying of enough magnetic force to a part 21 or whole 20 of magnetic film when the correct password is input through password input keys 10 on the lower limit of one side of the said card.

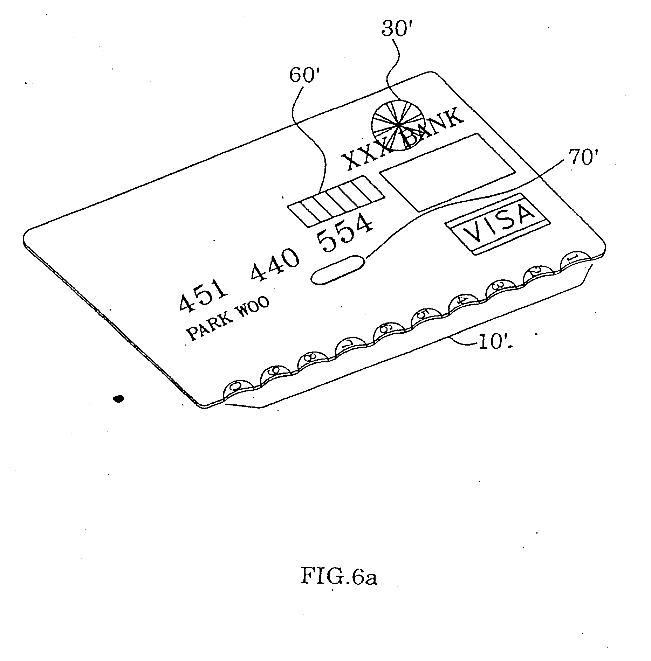

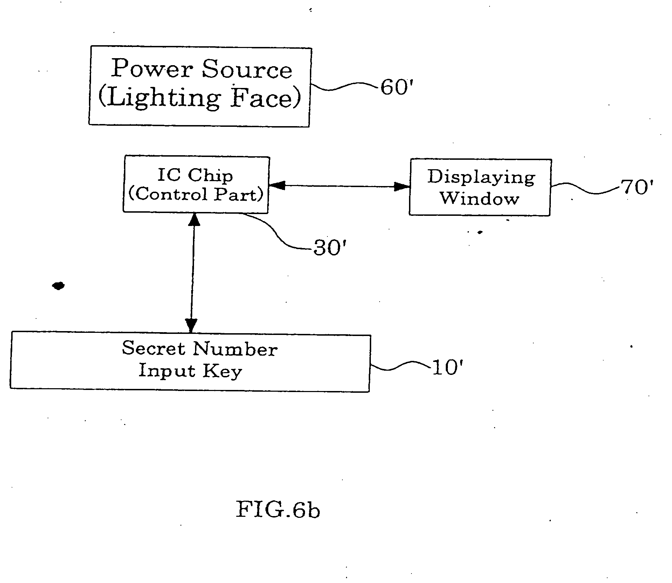

As stated above, the card equipped with password input keys and the activating method thereof can be applied in various ways. Figures 6a and 6b illustrate the application of the present invention to an IE control card also known as a smart card, showing a perspective view and a block diagram of inside circuitry respectively.

The card equipped with password input keys in accordance with an embodiment of the present invention, includes the password input keys 10' formed at the lower limit of one side of the card to activate the card, the IC chip 30' connected electrically to the password input keys 10' that controls the output of data including card and user information in accordance with password, and display window that displays all set to use the card after inputting correct password by password input key 10' under the control of the control section 30' and display an error when wrong password input. Fig 6a shows the front face of the card which is printed with the name of a bank, the card number, the owner's name, and so on. The magnetic film with the security code is printed on the back side of the card in Fig. 6a. Fig 6b shows the connection between the IC chip, secret number input key, and the displaying window.

The said IC chips 30' of the card may include a relay timer not shown in the figure to block the said data output when a fixed time elapses after the use of the card by inputting the correct password through the password input keys 10' according to installed control program. The card equipped with password input keys of an embodiment of the present invention, may be supplied electricity from the coil taking down system installed inside the IC chips 30' or from a separate power supply section 60' consisting of thin film typed photovoltaic solar film 60'.

The structure and composition of the said input keys 10' are same as those of the password input keys 10 as explained in Figure 3. Also, the said IC chips 30' depending on installed control programs can be set to have the same functions as the control section 30 referred to in Figures 2 and 5.

The card equipped with password input keys in accordance with the present invention can be used not only as credit cards or cash cards or ATM card with magnetic strips or IC chips or the combination thereof but also as security cards for high-level security clearance, entry cards or electronic identification cards. The application of the invention will prevent unauthorized use of stolen, lost, copied or forged cards. The card company or card member store does not need to change the existing equipment and network system like card reader so that no need to pay for additional fees.

## Claims

1. A card equipped with password input keys comprising
a magnetic film strip having magnetically imprinted thereon a security code, the magnetic film being demagnetized in a part or as a whole;
a permanent magnetic body is embedded in the card; and
a controller which is configured to apply the magnetic force of the said permanent magnetic body the demagnetized part of the magnetic film strip and to activate the demagnetized part of said magnetic film strip when a correct password is input from the said password input keys.

2. The card according to claim 1, wherein the said password input keys are located on the lateral side of the card.

3. The card according to claim 1, wherein the said password input keys is an array of numbers with a determined interval.

4. The card according to claim 3, wherein the said password input keys includes semicircular guides which separate said password input keys.

5. The card according to claim 4, wherein the password input keys comprise number boards on a lateral side of the card which boards are configured to be being elastically pushed; and wherein switches are provided in the number boards connecting input signals of the number boards to said controller when the number boards are pushed against the elastic force of the said number boards.

6. The card according to any of the preceding claims, further comprising a solar battery of thin film type for applying a control power on one side of the card.

7. The card according to any of the preceding claims, further comprising a display for alarming when the wrong password is input.

8. The card according to any of the preceding claims, further comprising a relay timer blocking the supply of magnetic force from said permanent magnetic body to the demagnetized magnetic film when a determined time lapses after the input of password.

9. The card according to claim 1, wherein the security code is printed in the form of barcode on the magnetic film strip of the card.

10. The card according to claim 1, wherein the said permanent magnetic body is a thin film.
